# EUROPÄISCHE PATENTSCHRIFT

(11) **EP 0 927 653 B1**
(45) Veröffentlichungstag und Bekanntmachung des Hinweises auf die Patenterteilung: **11.09.2002**
(21) Anmeldenummer: 98119970.6
(22) Anmeldetag: 22.10.1998
(51) Int. Cl.: B60J 5/04

(54) **Integrale Türinnenverstärkung**
Integral internal reinforcement for a door
Renfort interne intégral de porte

(30) Priorität: 06.11.1997 DE 19748970
(43) Veröffentlichungstag der Anmeldung: 07.07.1999
(73) Patentinhaber: Ford Global Technologies, Inc., A subsidiary of Ford Motor Company, Dearborn, Michigan 48126 (US)
(72) Erfinder: Weber, Norbert, 52074 Aachen (DE)
(74) Vertreter: Drömer, Hans-Carsten, Dipl.-Ing.

(56) Entgegenhaltungen:
- WO-A-94/07709
- WO-A-98/43842
- US-A- 4 948 196
- US-A- 5 364 157

## Beschreibung

Die Erfindung betrifft eine Fahrzeugtür mit integraler Türinnenverstärkung.

Die Integrale Türinnenverstärkung dient der erhöhten Sicherheit der Fahrgäste. Sie soll sowohl bei Frontal- als bei seitlichem Zusammenstoß eine Verformung der Tür verhindern. Insbesondere muß dafür gesorgt werden, dass die Tür auch nach einem Unfall noch vorschriftsmäßig geöffnet werden kann. Gleichzeitig darf die Tür nicht so steif gestaltet werden, dass bei dem trägheitsbedingten Aufprall des Fahrgastes gegen die Türinnenseite die zulässigen Lasten und Verformungswege überschritten werden.

Aufgabe der Erfindung war es, die genannten an sich gegenläufigen Zielrichtungen in optimaler Weise zu erfüllen.

Üblicherweise ist die integrale Türinnenverstärkung ein längliches Profil mit einem geeigneten Querschnitt. Es werden unterschiedliche Querschnittsformen verwendet. Eine derartige integrale Türinnenverstärkung ist für die erforderliche Aufnahme der Kräfte üblicherweise mit dem Türinnenblech verbunden, wobei insbesondere Punktschweißungen verwendet werden. Diese Verstärkungen dienen der Knickaussteifung der Tür unterhalb der Seitenscheibenbrüstung.

In US 4,948,196 ist eine Türinnenverstärkung beschrieben, die mit ihrer Längsachse zwischen A- und B-Säule deutlich unterhalb des Fensterausschnittes auf das Türscharnier weist. Die Verstärkung wird durch ein Rippenprofil gebildet und besteht aus spiegelbildlich aufeinandergesetzten Rippenblechen, wobei die Rippenachse parallel zur Längsachse der Verstärkung verläuft. In einem mittleren. Bereich der Verstärkung ist eine Verstärkungsplatte, den Zwischenraum zwischen den Rippen überbrückend, angebracht.

Hierdurch bildet sich in diesem Bereich ein topfförmiger Abschnitt. Dabei bleibt gerade der A-Säulen nahe Bereich im wesentlichen unverstärkt.

Erfindungsgemäß weist die Fahrzeugtür die Merkmale des Anspruchs 1 auf. Eine solche Fahrzeugtür weist wenigstens ein Außen-, Innen- und Türabschlußblech und eine integrale Türinnenverstärkung auf, die als längliches Profil ausgebildet und mit wenigstens einem topfförmigen Abschnitt versehen ist. Insbesondere mündet der längliche Abschnitt des Profils in den topfförmigen Abschnitt ein. Die Achse des Topfes steht etwa senkrecht auf der Profillängsachse. Der topfförmige Abschnitt und dessen Übergang in das längliche Profil bilden ein relativ steifes Kastenprofil. Die Anordnung und Geometrie dieses topfförmigen Abschnittes zwischen den Enden der länglichen integralen Türinnenverstärkung werden so angepasst, dass die erforderliche Steifigkeit erreicht wird.

Grundlage für eine definierte Übertragung von Lasten von der A- auf die B-Säule. Die Form bildet außerdem die Grundlage eine definierte Biegung der Gürtellinie zu erreichen, so daß die Tür nicht mit dem Rahmen verkeilt wird. Die Tür kann auch nach einem Frontalzusammenstoß unter üblichen Bedingen noch ohne Werkzeug geöffnet werden.

Nach einer weiter bevorzugten Ausführung wird die integrale Türinnenverstärkung sowohl mit dem Innenblech der Tür als auch mit dem Außenblech der Tür verbunden. Zusammen mit dem toppförmigen Abschnitt bildet diese Verbindung einen torsionssteifen Lastpfad, der die Lastverteilung beim Frontalzusammenstoß weiter verbessert.

Nach einer weiter bevorzugten Ausführung ist der topfförmige Abschnitt im Bereich des in Fahrtrichtung gesehen vorderen Türabschnittes angeordnet. Hierdurch wird die Lastverteilung beim Frontalzusammenstoß weiter verbessert.

Nach einer weiter bevorzugten Ausführung ist der topfförmige Abschnitt wenigstens an einer seiner Seiten, welche etwa senkrecht zum Boden verlaufen und am Boden selber mit Türblechen verbunden. Hierbei kann insbesondere der Boden mit dem Innenblech durch mehrere Punktschweißungen verbunden sein und die in Fahrtrichtung gesehen vorne liegende Seite des topfförmigen Abschnittes durch mehrere Punktschweißungen befestigt sein. Durch den mittels mehrerer Verbindungspunkte gebildeten Verbund werden im Bereich des topfförmigen Abschnittes die Membranbelastungen reduziert. Die Topfseitenflächen wirken als Zugstreben und nehmen einen Großteil der Lasten auf. Die Überführung von Membran- in Zugspannungen führt zu reduzierten Spannungen und Verformungen.

Bevorzugt ist eine integrale Türinnenverstärkung bei der an entgegengetzten Ende eines länglichen Profils eine Verbindung mit dem Innenblech und in einem dazwischenliegenden Teil mit dem Außenblech erfolgt. Hierdurch wird eine verbesserte Kraftübertragung erreicht.
Diese Anbindung, insbesondere im Zusammenwirken mit einer Topfgeometrie, bewirkt einen Lastpfad - in der Draufsicht eine Diagonalversteifung des Türkasten - der das nach fahrzeugaußen knickende Moment in der Tür reduziert. Bei einer sonst relativ steifen Gestaltung des Innbleches im Bereich der Rippen eines Insassen kann durch die Diagonalversteifung das Innblech relativ weich gestaltet werden.

Als topfförmiger Abschnitt ist auch anzusehen, wenn z.B. bei einem im wesentlichen U-förmigen Querschnitt des länglichen Abschnittes an dem Ende das dem Scharnier zugewandt ist ein senkrecht zur Längsachse verlaufendes Abschlußblech z.B. eingeschweißt ist oder wenn z.B. abschnittsweise der U-förmige Querschnitt verbeitert ist.

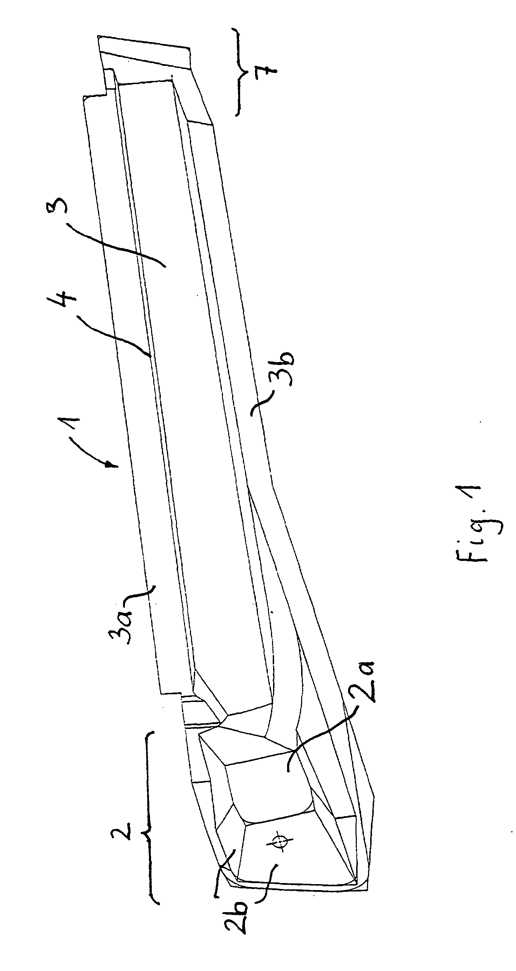

Die Erfindung wird anhand des in Fig. 1 schematisch dargestellten Ausführungsbeispieles näher erläutert.

Die integrale Türinnenverstärkung ist als längliches Profil 1 mit einem topfförmigen Abschnitt 2 ausgebildet. Im übrigen besteht das Profil im wesentlichen aus einer Basisfläche 3 an die sich eine abgekantete Seitenflächen 3a und 3b anschließen. Der topfförmige Abschnitt 2 besteht im wesentlichen aus Boden 2a und den Seitenflächen 2b (in der
Zeichnung sind nur 2 der Seitenflächen mit Bezugszeichen versehen). Die Aufgabe der Erfindung wird grundsätzlich durch jede Art der Versteifung des länglichen Profils gelöst. So könnte der topfförmige Abschnitt 2 z.B. auch durch einen oder mehrere Stege gebildet werden, wobei diese Stege z.B. mit der Basisfläche 3 verbunden sind (z.B. verschweißt oder vernietet). Derartige Stege würden in etwa senkrecht zur Basisfläche 3 stehen und z.B. auch im wesentlichen senkrecht zu den abgekanteten Seitenflächen 3a, 3b wobei insbesondere eine Verbindung auch mit diesen abgekanteten Seitenflächen vorgesehen sein kann. Im Bereich der abgekanteten Seitenfläche 3a ist die integrale Türinnenverstärkung etwa in Höhe des Fensterausschnittes mit dem Außenblech verbunden. Unterhalb der Flucht der Linie 4 ist in der in Fahrtrichtung gesehen vorderen Seitenfläche 2b (Steg) eine Befestigung 5 für das Türscharnier vorgesehen.. Im Bereich des Bodens 2a, sowie am entgegen gesetzten Ende 7 (bei einem Steg wäre dies entsprechend die Basisfläche 3) ist die integrale Türinnenverstärkung mit einem dem Insassen zugewandten Blech verbunden (Innenblech). Im Bereich der Scharnierbefestigung 5 (vordere Seitenfläche 2b bzw. Steg) ist die integrale Türinnenverstärkung an dem vorderen Türabschlußblech, welches üblicherweise als ein integraler Bestandteil des Innenbleches von diesem abgekantet ausgebildet ist, befestigt.

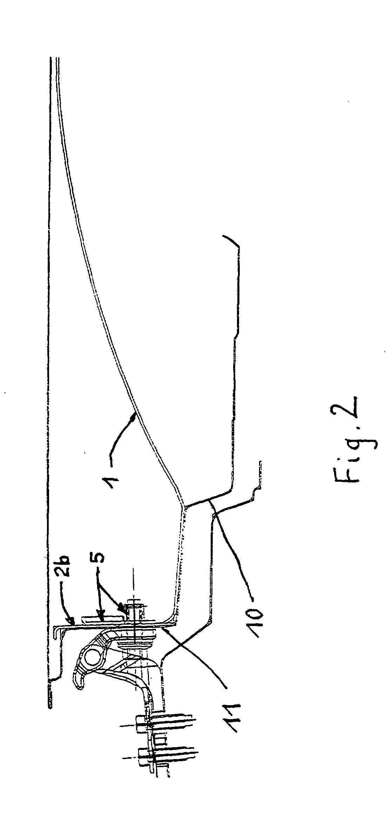

Fig. 2 zeigt den Scharnierbereich in einem Horizontalschnitt. Die integrale Türinnenverstärkung 1 ist mit dem Innenblech 10 bzw. dessen Abschnitt 11, welcher als Türabschlußblech zu sehen ist, verbunden. Im Bereich der Stegfläche 2b der integralen Türinnenverstärkung ist die Befestigung 5 für das Scharnier vorgesehen. Die Verwendung der intergralen Tütverstärkung als direkte Anbindung an das Scharnier wird als besonders vorteilhaft angesehen weil hierdurch die am Scharnier wirkenden Kräfte direkt in die entsprechend steife Struktur eingeleitet werden. Hierdurch wird eine Mehrfachfunktion für den Frontal- und Seitenstoß, sowie die Versteifung bei vertikaler Last auf die Tür erreicht. Die Anbindung der integralen Türinnenverstärkung an das Scharnier kann in unterschiedlichster Weise erfolgen. In Fig. 2 ist lediglich beispielhaft eine mit dem Abschnitt 2b verbundene Mutter zur Aufnahme eines Scharnierbefestigungsbolzens dargestellt.

## Patentansprüche

1. Fahrzeugtür mit integraler Türinnenverstärkung für eine definierte Übertragung von Lasten von der A- auf die B-Säule und mit Türblechen, die wenigstens ein Außenblech, wenigstens ein Innenblech und wenigstens ein Türabschlussblech aufweisen, welches im wesentlichen senkrecht zu Außen- und Innenblech verläuft und wobei die integrale Türinnenverstärkung als längliches Profil (1) ausgebildet und mit wenigstens einem topfförmigen Abschnitt (2) versehen ist,
**dadurch gekennzeichnet, dass**
ein topfförmiger Abschnitt (2) im Bereich des in Fahrtrichtung gesehen vorderen Türabschnittes angeordnet ist und die Türinnenverstärkung mit ihrer Längsrichtung etwa in Höhe des Fensterausschnitts auf das Türscharnier weist.

2. Fahrzeugtür mit integraler Türinnenverstärkung nach Anspruch 1,
**dadurch gekennzeichnet, dass**
eine erste Verbindung (2a, 7) mit dem Innenblech und eine zweite Verbindung (3a) mit dem Außenblech erfolgt.

3. Fahrzeugtür mit integraler Türinnenverstärkung nach Anspruch 1 oder 2,
**dadurch gekennzeichnet, dass**
eine Verbindung mit einem Türblech im Bereich des topfförmigen Abschnittes (2) in Form mehrerer Verbindungspunkte erfolgt.

4. Fahrzeugtür mit integraler Türinnenverstärkung nach einem der Ansprüche 1 bis 3,
**dadurch gekennzeichnet,dass**
der topfförmige Abschnitt an wenigstens einem Seitenabschnitt und am Boden mit einem oder mehreren der Türbleche verbunden ist.

5. Fahrzeugtür mit integraler Türinnenverstärkung nach einem der Ansprüche 1 bis 4,
**dadurch gekennzeichnet, dass**
der Boden (2a) des topfförmigen Abschnittes (2) und das dazu entgegengesetzte Ende (7) des länglichen Profils (1) mit dem Türinnenblech verbunden sind.

6. Fahrzeugtür mit integraler Türinnenverstärkung nach einem der Ansprüche 1 bis 5,
**dadurch gekennzeichnet, dass**
mit dem topfförmigen Abschnitt (2) eine Scharnierbefestigung (5) verbunden ist.

7. Fahrzeugtür mit integraler Türinnenverstärkung nach Anspruch 6,
**dadurch gekennzeichnet, dass**
die Scharnierbefestigung (5) an der zur Längsachse etwa senkrechten Endfläche (2b) des topfförmigen Abschnittes (2) angeordnet ist.

## Claims

1. Vehicle door having an integral inside door reinforcement for a defined transmission of loads from the A-pillar to the B-pillar, and having door panels which have at least one outside panel, at least one inside panel and at least one door end panel which runs essentially perpendicularly with respect to the outside panel and inside panel, and the integral inside door reinforcement being designed as an elongated profile (1) and being provided with at least one cup-shaped section (2), **characterized in that** a cup-shaped section (2) is arranged in the region of the front door section, as seen in the direction of travel, and the inside door reinforcement points with its longitudinal direction towards the door hinge approximately level with the window cutout.

2. Vehicle door having an integral door reinforcement according to Claim 1, **characterized in that** there is a first connection (2a, 7) to the inside panel and a second connection (3a) to the outside panel.

3. Vehicle door having an integral inside door reinforcement according to Claim 1 or 2, **characterized in that** a connection to a door panel takes place in the form of a plurality of connecting points in the region of the cup-shaped section (2).

4. Vehicle door having an integral inside door reinforcement according to one of Claims 1 to 3, **characterized in that** the cup-shaped section is connected at at least one side section and at the bottom to one or more of the door panels.

5. Vehicle door having an integral inside door reinforcement according to one of Claims 1 to 4, **characterized in that** the bottom (2a) of the cup-shaped section (2) and that end (7) of the elongated profile (1) which is opposite thereto are connected to the inside door panel.

6. Vehicle door having an integral inside door reinforcement according to one of Claims 1 to 5, **characterized in that** a hinge fastening (5) is connected to the cup-shaped section (2).

7. Vehicle door having an integral inside door reinforcement according to Claim 6, **characterized in that** the hinge fastening (5) is arranged on that end surface (2b) of the cup-shaped section (2) which is approximately perpendicular with respect to the longitudinal axis.

## Revendications

1. Porte de véhicule avec renfort interne intégral de porte pour un transfert défini de charges de la colonne A à la colonne B et comprenant des panneaux de porte qui présentent au moins un panneau externe, au moins un panneau interne et au moins un panneau de fermeture de porte, qui s'étend essentiellement perpendiculairement au panneau externe et au panneau interne et où le renfort interne intégral de porte est réalisé en tant que profilé longitudinal (1) et est pourvu d'au moins une portion en forme de pot (2), **caractérisée en ce qu'**une portion en forme de pot (2) est disposée dans la partie de la portion de porte avant vue dans la direction d'avance et le renfort interne de porte fait face, avec sa direction longitudinale approximativement à la hauteur de la section de fenêtre, à la charnière de porte.

2. Porte de véhicule avec renfort interne intégral de porte selon la revendication 1, **caractérisée en ce qu'**il est effectué une première connexion (2a, 7) au panneau interne et une deuxième connexion (3a) au panneau externe.

3. Porte de véhicule avec renfort interne intégral de porte selon la revendication 1 ou 2, **caractérisée en ce qu'**il est effectué une connexion avec un panneau de porte dans la région de la portion en forme de pot (2) sous la forme de plusieurs points de connexion.

4. Porte de véhicule avec renfort interne intégral de porte selon l'une quelconque des revendications 1 à 3, **caractérisée en ce que** la portion en forme de pot est connectée au niveau d'au moins une portion latérale et au niveau du fond à un ou plusieurs panneaux de porte.

5. Porte de véhicule avec renfort interne intégral de porte selon l'une quelconque des revendications 1 à 4, **caractérisée en ce que** le fond (2a) de la portion en forme de pot (2) et l'extrémité opposée (7) à celle-ci du profilé longitudinal (1) sont connectés au panneau interne de porte.

6. Porte de véhicule avec renfort interne intégral de porte selon l'une quelconque des revendications 1 à 5, **caractérisée en ce qu'**une fixation à charnière (5) est connectée à la portion en forme de pot (2).

7. Porte de véhicule avec renfort interne intégral de porte selon la revendication 6, **caractérisée en ce que** la fixation à charnière (5) est disposée sur la surface d'extrémité (2b) de la portion en forme de pot (2) approximativement perpendiculaire à l'axe longitudinal.
